# EUROPÄISCHE PATENTSCHRIFT

(11) **EP 0 315 713 B1**
(45) Veröffentlichungstag und Bekanntmachung des Hinweises auf die Patenterteilung: **10.11.1993**
(21) Anmeldenummer: 87202199.3
(22) Anmeldetag: 11.11.1987
(51) Int. Cl.: B01D 61/00, B01D 71/00, C02F 1/44, B01D 17/05, C05F 3/00

(54) **Verfahren und Anlage für die Behandlung von Abgängen aus der Tierhaltung.**
Process and installation for the treatment of waste water arising from the maintenance of livestock.
Procédé et installation pour le traitement des eaux usées en provenant du maintien d animaux

(43) Veröffentlichungstag der Anmeldung: 17.05.1989
(73) Patentinhaber: Josef van Opbergen GmbH & Co KG, 41472 Neuss (DE)
(72) Erfinder: van Opbergen, Gert, D-4040 Neuss (DE); Mende, Ulrich, D-4040 Neuss (DE)
(74) Vertreter: van der Beek, George Frans, Ir.

(56) Entgegenhaltungen:
- EP-A- 0 127 240
- NL-A- 8 501 374
- US-A- 3 171 805
- CHEMICAL ENGINEERING, Band 91, Nr. 12, 11.Juni 1984, New York, NY (US); L.E. APPLEGATE:"Membrane separatiom processes", Seiten 69-71
- JOURN. WATER POLL. CONT., Band 51, Nr. 3, März 1979; D.G. ARGO et al.:"Wastewater reclamation by reverse osmosis", Seiten 590-600

## Beschreibung

Die vorliegende Erfindung betrifft ein Verfahren entsprechend dem Oberbegiff des Anspruches 1.

Ein solches Verfahren ist aus der europäischen Patentanmeldung EP-A-0 127 240 bekannt. In dieser europäischen Anmeldung wird ein Verfahren zum Verarbeiten von Abfall in Mülldeponien beschrieben. Abfall aus Wohnungen, Gebäuden und industriellen Anlagen wird gesammelt und nach einer Mülldeponie transportiert. Das sich auf den Boden der Mülldeponie sammelnde Wasser wird nach dieser europäischen Patentanmeldung mit einer Membranfiltration gereinigt. Das dabei hergestellte Permeat wird abgeführt und das hergestellte Konzentrat wird zu einer Nachbehandlung, wie Nachkonzentrieren oder Verbrennen, unterworfen.

Da das Abfall aus sehr wechselnden Bestandteilen besteht, lässt sich das Konzentrat nicht verwerten.

In der niederländischen Patentanmeldung 8501374 wird eine Behandlungsanlage für eine Kanalisation beschrieben. Der dort anfallende Abfall besteht jedoch aus sehr gemischten Bestandteilen, sodass die Verwertung nach der Erfindung dabei prinzipiell nicht zu realisieren ist.

Der Zweck der Erfindung ist ein Verfahren vorzuschlagen, das für die Behandlung von Abgängen aus der Tierhaltung geeignet ist und bei dem ein verwertbares Produkt entsteht.

Dieser Zweck wird bei dem oben beschriebenen Verfahren nach dem kennzeichnenden Teil des Anspruches 1 erreicht. Nach der Erfindung werden die bei der Umkehrosmose zurückgehaltenen Inhaltsstoffe dem Schlamm zugemischt. Dadurch werden alle Inhaltsstoffe der Abgänge zurückgewonnen und es entsteht ein verwertbarer Dünger und Abfallschlamm.

Düngerkonzentrat ist ein nützlich verwertbarer Stoff, während es für Schlamm im Stand der Technik bekannte Weiterverarbeitungsmass-nahmen gibt. Das bei dieser Behandlung freiwerdende Biogas kann aufgefangen werden. Der bei der oben beschriebenen Trennungsbehandlung freigewordene Schlamm, der eiweissreich ist, wird nach dem Umkehrosmoseschritt einer Trocknungsbehandlung unterzogen und der wenigstens teilweise getrocknete Schlamm wird mit dem aus der Einrichtung für die Durchführung der umgekehrten Osmose stammenden Konzentrat gemischt. Dieses Konzentrat enthält viele nützliche Mineralstoffe. Das so hergestellte Gemisch lässt sich sehr gut nützlich in der Landwirtschaft anwenden. Das vorherige Trocknen des Schlamms dient dazu, das Trocknen von Konzentrat weitestmöglich zu vermeiden, weil dort die Gefahr der Ablagerung von Mineralstoffen wie Kalium und Phosphor besteht. Das so gebildete Gemisch kann eventuell zur grösseren Handlichkeit weiter getrocknet werden.

Damit das oben beschriebenen Verfahren so zweckmässig wie möglich abläuft, wird der Abfallstrom vor der Anwendung der umgekehrten Osmosebehandlung einer Trennungsbehandlung, insbesondere einer Ausflockungsbehandlung, unterzogen. Dabei kann man als Ausflockungsmittel (Meth)acryl(co)polymer auf Acrylsäurebasis wie Polyacrylamid verwenden.

Um die in den Abgängen befindlichen Gase zu entfernen, kann man diesen Strom einer Entgasungsbehandlung unterziehen. Dabei kann zum Beispiel Luft als Entgasungsmittel verwendet werden. Bei der Anwendung des oben beschriebenen Verfahrens für die Behandlung von Jauche ist eines der Gase, die sich in dem wässrigen Abfallstrom befinden, Schwefelwasserstoff. Diese Behandlung kann sowohl nach der Anwendung der umgekehrten Osomose in dem Permeat wie auch vor der Durchführung der umgekehrten Osmose stattfinden.

Die Erfindung betrifft ebenfalls eine Anlage zur Durchführung des oben beschriebenen Verfahrens gemäß Anspruch 8.

Die Erfindung wird im folgenden an Hand von in der Zeichnung schematisch dargestellten Ausführungsbeispielen näher erläutert. Darin zeigen:
Figur 1, eine Anlage zur Verarbeitung eines Abfallstroms in grossem Massstab;
Figur 2, eine Anlage zur zentralen Verarbeitung eines Abfallstroms;
Figur 3, eine Anlage zur mobilen Verarbeitung eines Abfallstroms;
Figur 4, eine Variante der in Figur 1 dargestellten Anlage;
Figur 5, eine Variante der in Figur 1 dargestellten Anlage, und
Figur 6, eine Variante der in Figur 1 dargestellten Anlage, nunmehr versehen mit Mitteln zur weiteren Verarbeitung der entstehenden Produkte.

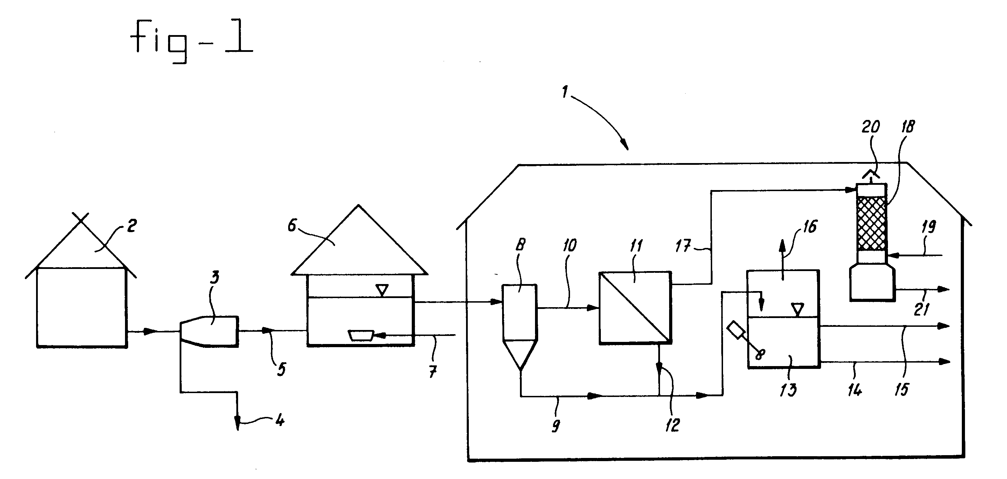

In Figur 1 ist mit 1 eine Anlage zum Konzentrieren eines Abfallstroms, in diesem Fall Abgänge aus der konzentrierten Tierhaltung, insgesamt mit 1 angegeben. Die Abgänge stammen aus einem Stall 2. Bevor die Abgänge aus dem Stall 2 zu der Anlage 1 geleitet werden, werden in einer Dekantiereinrichtung 3 die Grobteile abgeschieden. Die Abfuhr grober Teile ist mit 4 angegeben. Die dabei entstandene "feine" Jauche ist mit 5 angegeben und wird in einen Silo 6 geleitet. Mit 7 wird angegeben, dass dieser Silo belüftet wird. Danach wird die Jauche in die Anlage zum Konzentrieren eines Abfallstroms eingeleitet. Dort wird die Jauche zunächst in der Ausflockungseinrichtung 8 einer Ausflockungsbehandlung unterzogen. Dabei entsteht ein Schlammstrom 9. Das restliche Material 10 wird einer Einrichtung zur Durchführung der umgekehrten Osmose 11 zugeführt. Das daraus resultierende Konzentrat 12 wird mit dem Schlamm 9 einer Abscheidungseinrichtung 13 zugeführt, wo es in Schlamm 14, Dünger 15 und Biogas 16 getrennt wird. Das bei 17 freiwerdende Wasser wird einer "Strip"-Behandlung unterzogen. In der dazu verwendeten Einrichtung 18 wird bei 19 Luft eingeleitet, die durch das Wasser geführt wird. Dabei entweichen bei Abfuhr 20 Luft und zum Beispiel H₂S. Der bei 21 freiwerdende Permeatstrom besteht aus sehr sauberem Wasser.

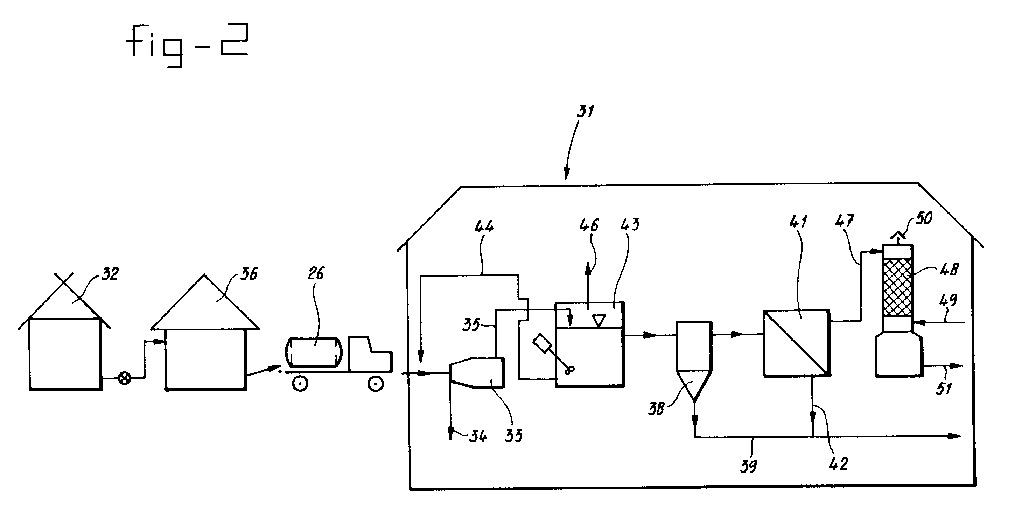

In Figur 2 ist eine Anlage zum Konzentrieren eines Abfallstroms dargestellt, die als zentrale Anlage gemeint ist. Der insgesamt mit 31 angegebenen Anlage zum Konzentrieren eines Abfallstroms wird über ein fahrbares Transportmittel, wie beispielsweise einen Lastkraftwagen 26, Jauche zugeführt. Dieser Lastkraftwagen sammelt bei verschiedenen Unternehmen die aus dem Stall 32 stammende, in Silos 36 gelagerte Jauche ein. Diese wird daraufhin einer Dekantiereinrichtung 33 zugeführt. Dabei werden Dünger 34 und "feine" Jauche 35 frei. Im Gegensatz zu der oben beschriebenen Einrichtung wird der Abfallstrom nun bereits in Einrichtung 43 einer Trennbehandlung unterzogen. Dabei werden Biogas 46 und Schlamm 44 frei, der Jedoch in diesem Falle zum Einlass der Dekantiereinrichtung 33 weitergeleitet wird. Der Abfallstrom wird daraufhin einer Ausflockungseinrichtung 38 zugeführt. Der dabei entstandene Schlamm 39 wird zusammen mit dem Konzentrat 42, das aus der Einrichtung zur umgekehrten Osmose 41 stammt, gemischt und abgeführt. Das Permeat, das aus der Einrichtung 41 für die Durchführung der umgekehrten Osmose stammt, wird, wie bereits an Hand von Figur 1 beschrieben, einer Entgasungseinrichtung 48 zugeführt. dabei werden Gase 50 uns sauberes Wasser 51 bei der Zufuhr von Luft bei 49 frei.

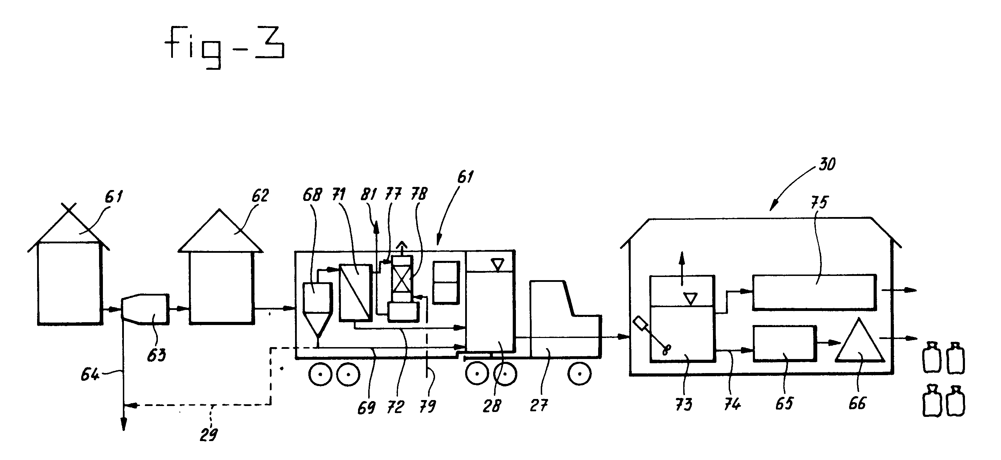

In Figur 3 ist eine Anlage zur mobilen Verarbeitung eines Abfallstroms dargestellt. Diese Anlage ist auf einem Fahrzeug 27 montiert und insgesamt mit 61 angegeben. Die Anlage 61 wird mit dem Fahrzeug 27 zum Silo 62 gefahren, wobei die aus dem Stall 61 kommende Jauche einer Konzentrationsbehandlung unterzogen wird. Zum Abscheiden der in dem Abfallstrom befindlichen groben Teile ist zwischen dem Stall 61 und dem Silo 62 eine Dekantiereinrichtung 63 angebracht worden. In der Anlage 61 wird die Jauche zunächst einer Ausflockungsbehandlung in der Ausflockungseinrichtung 68 unterzogen. Der dabei freiwerdende Schlamm 69 kann einem Konzentrathalter 28 zugeführt werden oder aber mit dem bei der Dekantiereinrichtung 63 freiwerdenden Dünger 64 gemischt werden, wie mit Strichellinien mittels des Pfeils 29 angegeben worden ist. In der Einrichtung zur Durchführung der umgekehrten Osmose 71 wird Konzentrat 72 frei, das ebenfalls dem Konzentrathalter 28 zugeführt wird. Das freiwerdende Permeat 77 wird einer Entgasungseinrichtung zugeführt. Dieser Entgasungseinrichtung wird bei 79 Luft zugeführt. Das dabei freiwerdende Permeat 81 ist so sauber, dass dies auf die übliche Weise abgeführt werden kann. Das aus dem Konzentrathalter 28 stammende Konzentrat kann an einer zentralen Stelle mit einer insgesamt mit 30 angegebenen Einrichtung verarbeitet werden. Diese Einrichtung 30 besteht aus einer Trenneinrichtung 73, wo Schlamm 74 und Düngerkonzentrat 75 entstehen. Dieser Schlamm 74 kann bei 65 weiter getrocknet werden und als Fäulnismaterial bei 66 abgeführt werden.

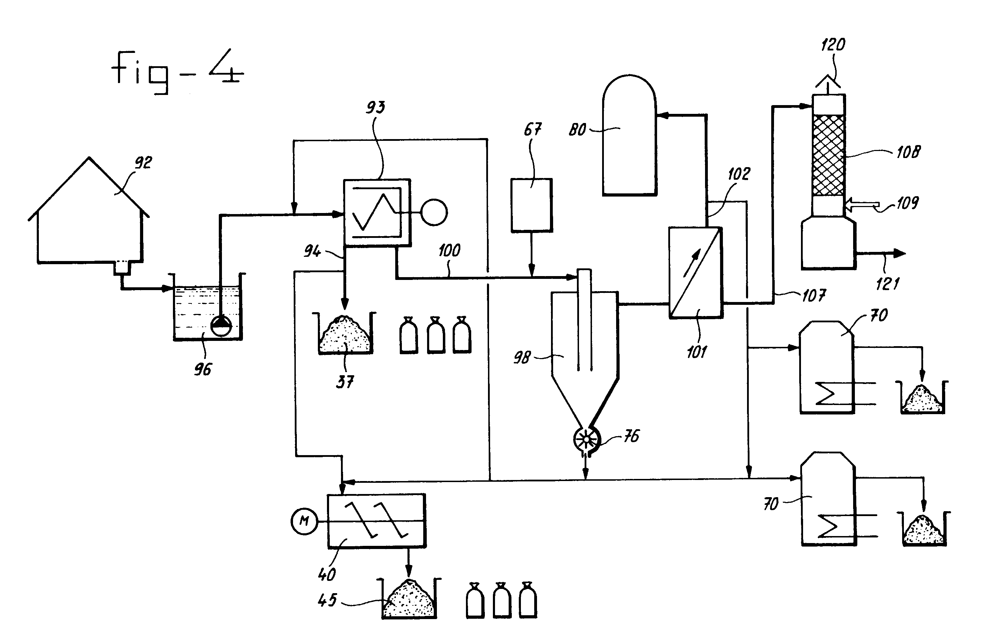

In Figur 4 ist eine Variante der in Figur 1 dargestellten Einrichtung dargestellt. Aus dem Stall 92 stammende Jauche wird im Jauchekeller 96 gelagert und danach zu der Dekantiereinrichtung 93 gepumpt. Die dabei entstehenden Grobteile 94 können bei 37 gelagert werden oder zu einer Mischeinrichtung 40 geführt werden und nach der Mischung bei 45 gelagert werden. Der in der Dekantiereinrichtung 93 konzentrierte Strom 100 wird einer Ausflockungseinrichtung 98 zugeführt. Um die Ausflockung zu realisieren wird dem Strom 100 bei 67 ausflockungsförderndes Material hinzugefügt. Dieses Material kann Polyacrylamid enthalten. Das ausgeflockte Material wird über Zellenrad 76 aus der Ausflockungseinrichtung 98 abgeführt. Dieses Material kann der Mischeinrichtung 40. der Dekantiereinrichtung 93 oder einem Trockner 70 zugeführt werden. Der aus der Ausflockungseinrichtung 98 stammende Jauchestrom wird der Einrichtung zur Durchführung der umgekehrten Osmose 101 zugeführt. Das dabei entstehende Konzentrat 102 kann entweder dem Trockner 70, der Mischeinrichtung 40 oder aber dem Einlass der Dekantiereinrichtung bei 93, oder aber einem speziell dafür vorgesehenen Silo 80 für Konzentrat zugeführt werden. Das Permeat 107 wird einer Entgasungseinrichtung 108 zugeführt, wo es auf die übliche Weise behandelt wird. Dabei entsteht Permeat 121 bei der Zufuhr von Luft 109 und werden Gase 120 abgeführt.

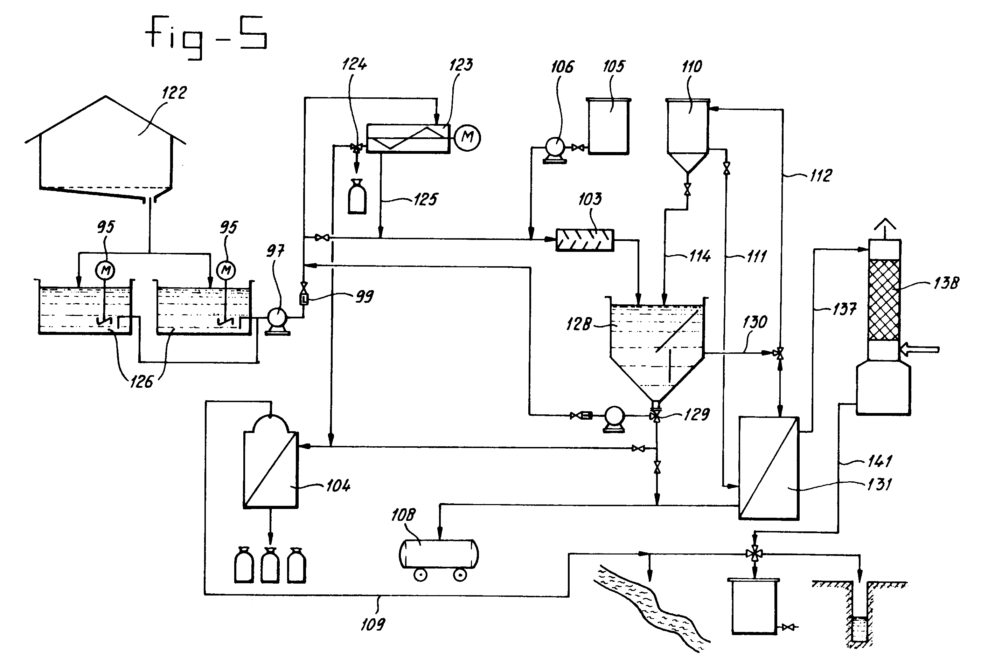

In Figur 5 ist eine weitere Ausführungsvariante der Erfindung wiedergegeben. Das aus dem Stall 122 kommende Jauchematerial wird in zwei Lagerkellern 126 gelagert. Darin befinden sich Motoren 95, um das Gemisch homogen zu machen. Die Jauche wird über die Pumpe 97 und über Einwegventil 99 entweder der Dekantiereinrichtung 123 oder aber der Mischeinrichtung 103 zugeführt. In der Dekantiereinrichtung entsteht ein Strom von Grobteilen, der mit 124 angegeben ist, und ein Strom "feiner" Jauche, der mit 125 angegeben ist.
Das von 124 abkommende Material kann unmittelbar verpackt werden oder einer Trockenbehandlung in der Trockeneinrichtung 104 unterzogen werden. Der Strom 125 geht zur Mischeinrichtung 103 und wird danach einer Ausflockungseinrichtung 128 zugeführt. Zur Förderung der Ausflockung wird vor der Mischeinrichtung Ausflockungsmittel aus dem Behälter 105 und über die Pumpe 106 hinzugefügt. Das ausgeflockte Material 129 kann zum Einlass der Anlage zum Konzentrieren eines Abfallstroms zurückgeführt werden, kann in Trockner 104 zur weiteren Verarbeitung getrocknet werden oder kann in Gefäss 108 gelagert werden. Der Jauchestrom 130, der aus der Ausflockungseinrichtung stammt, wird der Einrichtung für die Durchführung der umgekehrten Osmose 131 zugeführt. Der dabei entstandene Schlamm wird in Behälter 108 gelagert. Das Permeat 137 wird einer Entgasungseinrichtung 138 zugeführt. Das entgaste Permeat 141 wird eventuell mit Wasser 109 aus der Trockeneinrichtung vermischt in das Oberflächenwasser eingeleitet oder in einen Behälter abgeführt. Um die Membran der Einrichtung 131 für die Durchführung der umgekehrten Osmose zu reinigen, ist eine Einrichtung 110 vorgesehen, die eine spülende Lösung, zum Beispiel auf Phosphatbasis, enthält. Wenn Spülen erforderlich ist, wird aus dem Behälter 110 kommende Lösung über Leitung 111 in die Einrichtung zur Durchführung der umgekehrten Osmose 131 eingeleitet. Diese Spüllösung wird über Leitung 112 wieder zum Behälter 110 zurückgeführt. Wenn die Lösung nicht mehr optimal wirksam ist, kann sie über Leitung 114 der Ausflockungseinrichtung 128 zugeführt werden und auf die oben beschriebene Weise abgeführt werden.

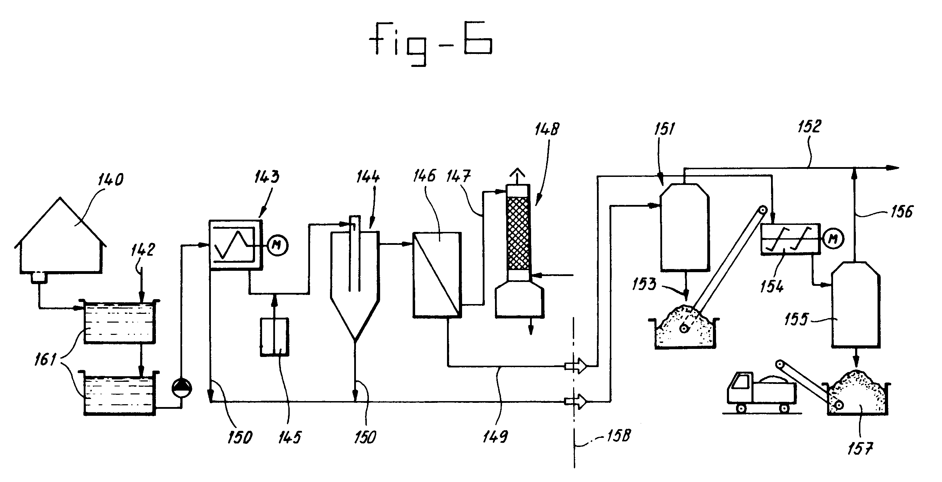

In Figur 6 ist eine weitere Ausführung der erfindungsgemässen Anlage dargestellt. Die aus dem Stall 140 kommende Jauche wird in einen Jauchekeller 161 eingeleitet. Dabei können in den oberen in der Zeichnung dargestellten Jauchekeller ebenfalls Bakterien 142 eingesetzt werden, die die Gärung einleiten. Das Gemisch wird danach zur Dekantiereinrichtung 143 befördert und danach zu der Ausflockungseinrichtung 144 gebracht. Zur Förderung der Ausflockung kann bei 145 ein Ausflockungsmittel hinzugefügt werden. Ein Teil des aus der Ausflockungseinrichtung kommenden Produkts wird der Einrichtung 146 zur Durchführung der umgekehrten Osmose zugeführt. Das freiwerdende Permeat 147 wird auf die oben beschriebene Weise einer Entgasungseinrichtung 148 zugeführt. Mit 149 ist das freiwerdende Konzentrat angegeben.
Der wesentliche Unterschied zwischen der in Figur 6 dargestellten Anlage und den oben gezeigten Anlagen ist, dass der bei den einzelnen Behandlungen freiwerdende Schlamm, der in der Zeichnung mit 150 angegeben worden ist, mit dem bei 149
freiwerdenden Konzentrat gemischt wird. Weil das Konzentrat nützliche Mineralstoffe wie Kalium und Phosphor enthält und diese dazu neigen, sich beim Trocken an der Wand einer Trockeneinrichtung abzulagern, ist es erwünscht, den Schlamm zunächst gesondert in einer Trockeneinrichtung zu behandeln. Dabei werden Wasserdampf 152 und getrockneter Schlamm 153 frei. Der getrocknete Schlamm wird in Mischer 153 mit dem Konzentrat 149 gemischt. Um dessen Behandlung zu erleichtern, kann dieses Gemisch in einer weiteren Trockeneinrichtung 155 behandelt werden. Der dabei freiwerdende Wasserdampf ist mit 156 angegeben worden, während das nützlich zu verwertende Produkt mit 157 angegeben worden ist. Dieses Gemisch ist interessant, weil der Schlamm Eiweiss enthält, das in der Kombination mit den bereits genannten Mineralstoffen in der Agrarwirtschaft ein nützlich verwertbares Material ergibt.
Selbstverständlich kann der in Figur 6 rechts der Punktlinie 158 dargestellte Teil bei der Anlage, wie sie in den vorigen Figuren dargestellt worden ist, angewandt werden.

## Patentansprüche

1. Verfahren für die Behandlung von Abgängen aus der Tierhaltung, bei dem man Umkehrosmose anwendet, dadurch gekennzeichnet, dass man :
- die Abgänge einer Trennungsbehandlung unterzieht, bei der Schlamm frei wird,
- das restliche Material von der Trennungsbehandlung zur umgekehrten Osmose zuführt
- die bei der Umkehrosmose zurückgehaltenen Inhaltsstoffe mit dem Schlamm mischt, und das Gemisch aus Schlamm und zurückgehaltenen Inhaltsstoffen einer weiteren Trocknungsbehandlung unterzieht und das getrocknete
Produkt als "Dünger" weiter verwertet.

2. Verfahren nach Anspruch 1, bei dem der Schlamm von einer Ausflockungsbehandlung stammt, der die Abgänge vor der Behandlung mit Umkehrosmose unterzogen wurden.

3. Verfahren nach Anspruch 2, wobie man die Ausflockungsbehandlung mit (Meth)acryl(co)polymer ausführt.

4. Verfahren nach Anspruch 2-3, wobei man Polyacrylamid verwendet.

5. Verfahren nach einem der vorigen Ansprüche, wobei man den wässrigen Abfallstrom einer Entgasungsbehandlung unterzieht.

6. Verfahren nach Anspruch 5, bei dem man die Entgasungsbehandlung mit Luft durchführt.

7. Verfahren nach einem der vorigen Ansprüche, bei dem man das bei der Trennbehandlung freiwerdende Biogas auffängt.

8. Anlage zur Durchführung des Verfahrens nach Ansprüchen 1-7 dadurch gekennzeichnet, daß vor einer Umkehrosmoseeinrichtung (11,41,71,101,104,146) eine Trennungsvorrichtung (8, 38, 68, 98, 128, 144) geschaltet ist, deren Auslass mit dem Auslass für das Konzentrat der Umkehrosmoseeinrichtung verbunden ist, und dass stromabwärts dieser Verbindungspunkt der Auslass in einer Trockungsvorrichtung (13, 70, 73, 151) einmündet

9. Anlage nach Anspruch 8 bei der die Trennungsvorrichtung eine Ausflockungseinrichtung umfasst.

10. Anlage nach Anspruch 9, bei der die Ausflockungseinrichtung von der in der Hauptsache senkrechten Art ist und die mit Mitteln versehen ist, mit denen das schwimmende und/oder sich ablagernde Material abgeführt werden kann.

11. Anlage nach einem der Ansprüche 8-10, mit einer Entgasungseinrichtung versehen.

12. Anlage nach einem der Ansprüche 8-11, mit einer in der Strömungseinrichtung des Abfallstroms stromabwärts der Einrichtung zur Durchführung der umgekehrten Osmose angebrachten Trenneinrichtung für den Konzentratstrom.

13. Einrichtung nach einem der Ansprüche 8-12, mit einer Trockeneinrichtung für Schlamm und einer Micheinrichtung für Schlamm und Konzentrat versehen.

## Claims

1. Process for the treatment of wastes from animal husbandry, in which reverse osmosis is used, characterised in that:
- the wastes are subjected to a separation treatment, in which the sludge is released,
- the residual material from the separation treatment is fed to the reverse osmosis,
- the constituents retained in the reverse osmosis are mixed with the sludge and the mixture of sludge and retained constituents is subjected to a further drying treatment and the dried product is further utilised as "manure".

2. Process according to Claim 1, in which the sludge originates from a flocculation treatment to which the wastes were subjected prior to the treatment by reverse osmosis.

3. Process according to Claim 2, wherein the flocculation treatment is carried out using (meth)acrylic (co)polymer.

4. Process according to Claims 2-3, wherein polyacrylamide is used.

5. Process according to one of the preceding claims, wherein the aqueous waste stream is subjected to a degassing treatment.

6. Process according to Claim 5, in which the degassing treatment is carried out using air.

7. Process according to one of the preceding claims, in which the biogas released in the separation treatment is collected.

8. Plant for carrying out the process according to Claims 1-7, characterised in that, upstream of a reverse osmosis device (11, 41, 71, 101, 104, 146), is connected a separation apparatus (8, 38, 68, 98, 128, 144), the outlet of which is connected to the outlet for the concentrate of the reverse osmosis device and in that downstream of this connection point the outlet opens out into a drying apparatus (13, 70, 73, 151).

9. Plant according to Claim 8 in which the separation apparatus includes a flocculation device.

10. Plant according to Claim 9, in which the flocculation device is of the principally vertical type and is furnished with means by which the floating and/or depositing material can be carried away.

11. Plant according to one of Claims 8-10, furnished with a degassing device.

12. Plant according to one of Claims 8-11, having a separating device for the concentrate stream mounted, in the direction of flow of the waste stream, downstream of the device for carrying out the reverse osmosis.

13. Device according to one of Claims 8-12, furnished with a drying device for sludge and a mixing device for sludge and concentrate.

## Revendications

1. Procédé de traitement des eaux usées provenant d'élevage d'animaux dans lequel on utilise une osmose inverse caractérisée en ce que
on soumet les eaux usées à un traitement de séparation dans lequel une boue est libérée,
le reste de la matière venant du traitement de séparation est soumis à une osmose inverse,
le contenu retenu lors de l'osmose inverse est mélangé avec la boue et le mélange de boue et de contenu retenu est soumis à un traitement ultérieur de séchage, et le produit séché est ensuite utilisé comme "engrais".

2. Procédé selon la revendication 1, dans lequel la boue résulte d'un traitement de floculation auquel les eaux usées ont été soumises avant le traitement à l'osmose inverse.

3. Procédé selon la revendication 2, dans lequel le traitement de floculation est réalisé avec un (Méth)acryl(co)polymère.

4. Procédé selon la revendication 2 ou 3 dans lequel on utilise un polyacrylamide.

5. Procédé selon l'une des revendications précédentes dans lequel on soumet le courant d'eaux usées à un traitement de dégazage.

6. Procédé selon la revendication 5 dans lequel on effectue le traitement de dégazage avec de l'air.

7. Procédé selon l'une des revendications précédentes dans lequel on recueille le gaz biologique qui se dégage lors du traitement de séparation.

8. Installation de mise en oeuvre du procédé selon l'une des revendications 1 à 7 caractérisée en ce qu'il est monté, en amont d'une installation d'osmose inverse (11, 41, 51, 111, 104, 146), un dispositif de séparation (8, 38, 69, 98, 128, 144), dont la sortie est reliée à la sortie de concentrat de l'installation d'osmose inverse, et en ce que la sortie débouche, en aval de ce point de liaison, dans une installation de séchage (13, 70, 73, 151).

9. Installation selon la revendication 8 dans laquelle l'installation de séparation comprend une installation de floculation.

10. Installation selon la revendication 9, dans laquelle l'installation de floculation est du type principalement vertical et est pourvue de moyens, à l'aide desquels la matière flottante et/ou la matière qui se dépose peuvent être évacuées.

11. Installation selon l'une des revendications 8 à 11 pourvue d'une installation de dégazage.

12. Installation selon l'une des revendications 8 à 11, pourvue d'une installation de séparation du courant de concentrat montée, dans le dispositif d'écoulement du courant d'eaux usées, en aval du dispositif de mise en oeuvre de l'osmose inverse.

13. Installation selon l'une des revendications 8 à 12 comprenant une installation de séchage de boue et une installation de mélange de la boue et du concentrat.
